# EUROPEAN PATENT SPECIFICATION

(11) **EP 3 459 216 B1**
(45) Date of publication and mention of the grant of the patent: **22.06.2022**
(21) Application number: 17814688.2
(22) Date of filing: 20.06.2017
(51) Int. Cl.: H04L 47/36, H04L 43/0894

(54) **SYSTEM AND METHOD FOR MTU SIZE REDUCTION IN A PACKET NETWORK**
SYSTEM UND VERFAHREN ZUR REDUKTION DER MTU-GRÖSSE IN EINEM PAKETNETZWERK
SYSTÈME ET PROCÉDÉ DE RÉDUCTION DE TAILLE DE MTU DANS UN RÉSEAU À COMMUTATION PAR PAQUETS

(30) Priority: 24.06.2016 US 201615192152
(43) Date of publication of application: 27.03.2019
(73) Proprietor: Huawei Technologies Co., Ltd., Longgang District Shenzhen, Guangdong 518129 (CN)
(72) Inventor: ASHWOOD-SMITH, Peter, Gatineau, Québec J9A 2V8 (CA)
(74) Representative: Epping - Hermann - Fischer
(86) International application number: PCT/CN2017/089090
(87) International publication number: WO 2017/219950

(56) References cited:
- EP-A1- 2 472 804
- CN-A- 101 138 200
- CN-A- 101 521 622
- US-A1- 2012 245 929
- US-A1- 2014 376 427
- US-B1- 6 650 652

## Description

### FIELD

The following relates to modifying a maximum transmission unit (MTU) value associated with an output port of a network entity.

### BACKGROUND

In a packet-switched network, data packets flow from a source to a destination by being forwarded from one network entity in the network to another. A network entity may have an output port, and a maximum transmission unit (MTU) size may be associated with the output port. The MTU size is the size of the largest packet that can be transmitted through the output port to the next network entity over a link. A packet to be transmitted through the output port may be discarded if the packet has a size that is greater than the MTU size. Alternatively, a packet larger than the MTU size may be fragmented into packets below the MTU size. The smaller packets may then be transmitted through the output port instead.

It is often desirable to have a relatively large MTU size associated with an output port. A larger MTU size means larger packets may be transmitted through the output port.

Transmitting larger packets through the output port may be more efficient than transmitting smaller packets through the output port. Each packet may have associated overhead and per-packet processing time. The more data that can be transmitted in one packet (i.e. the larger the packet), the higher the ratio of data to overhead, and therefore the more efficient the data transmission.

However, when a large packet is being transmitted through the output port, the output port is occupied for a longer period of time compared to the time required to transmit a smaller packet through the output port.

US20140376427A1 discloses a sender in a shared-communication network. The sender determines whether a pending frame is low-latency or high-throughput, and sets a maximum transmission unit (MTU) of the pending frame as a first MTU in response to a low-latency frame and a longer second MTU in response to a high-throughput frame. The document further discloses a receiver. The receiver receives a data frame from a sender according to an MTU, and determines a trigger for adjusting the MTU based on latency requirements. In response to the trigger, the receiver sets an interrupt flag in a link-layer acknowledgment for the received data frame. The document further discloses a sender. The sender determines a pending low-latency data frame to send to a receiver operating according to an MTU, and sends a control message to the receiver to indicate the pending low-latency data frame and an adjusted MTU.

US20120245929A1 discloses an audio output terminal device, wherein a buffer control unit adjusts the buffer size of a jitter buffer in accordance with the setting of a sound output mode instructed in an instruction receiving unit. If the instruction receiving unit acknowledges an instruction for setting an audio output mode that requires low delay in outputting sound, the buffer control unit reduces the buffer size of the jitter buffer. Further, the buffer control unit controls, in accordance with the instructed setting of the sound output mode, timing for allowing a media buffer to transmit one or more voice packets to the jitter buffer.

In US6650652B1 a system and method are disclosed. Voice packets are encoded to include header bits that indicate the presence and duration of pauses in the voice transmission. A Network linking device monitors incoming voice packets on a link, checking for the presence of a pause. The linking device also keeps track of all voice connections on the link. When none of the voice connections are active, the linking device increases the size of the maximum allowed transferable unit (MATU), thus fragmenting less data packets than it would have fragmented if a voice connection had been active.

### SUMMARY

Systems and methods are disclosed that reduce the MTU size associated with an output port when a jitter sensitive packet flow utilizes the output port. This may reduce the amount of jitter introduced into the jitter sensitive packet flow. When a packet from the jitter sensitive packet flow arrives at a queue of the output port, the packet may not be able to be transmitted through the output port if another lower priority packet is already in the process of being transmitted through the output port. The packet of the jitter sensitive packet flow may need to wait until after the other lower priority packet is finished being transmitted. The amount of time it takes for the other lower priority packet to be transmitted is related to the size of the lower priority packet. A large MTU size means the lower priority packet may potentially be large, which means a larger delay may be incurred before the packet of the jitter sensitive packet flow can be transmitted through the output port. The larger the MTU size, the larger the variation in the potential delay incurred before the packet of the jitter sensitive packet flow can be transmitted.

By reducing the MTU value associated with the output port when a jitter sensitive packet flow is present, delay variation introduced into the jitter sensitive packet flow may be reduced. For example, the MTU size associated with an output port may be set to a first value for use when a jitter sensitive packet flow is not present. Then, when a jitter sensitive packet flow is present, the MTU size may be set to a second lower value. The MTU size may then be increased back to the first value once the jitter sensitive packet flow is no longer present.

In one embodiment, there is provided a method performed by a network entity according to claim 1.

A network entity configured to perform the method is also disclosed.

In another embodiment, there is provided a method performed by a traffic manager in a network according to claim 7.

A traffic manager configured to perform the method is also disclosed.

### BRIEF DESCRIPTION OF THE DRAWINGS

Embodiments will be described, by way of example only, with reference to the accompanying figures wherein:
FIG. 1 is a block diagram of a packet network;
FIG. 2 is a block diagram of the packet network, but illustrating an example jitter-sensitive packet flow;
FIG. 3 is a block diagram of a node, according to one embodiment of the invention;
FIG. 4 is an example timeline illustrating queues and a transmitter of the node, at different points in time;
FIG. 5 is a block diagram of a traffic manager, according to one embodiment of the invention;
FIG. 6, which consists of FIGs. 6A and 6B, is a flowchart of operations performed by the traffic manager and nodes, according to one embodiment of the invention;
FIG. 7 is a flowchart of operations performed by a network entity;
FIG. 8 is a flowchart of operations performed by another network entity; and
FIG. 9 is a block diagram of a node, according to another embodiment of the invention.

### DETAILED DESCRIPTION

For illustrative purposes, specific example embodiments will now be explained in greater detail below in conjunction with the figures.

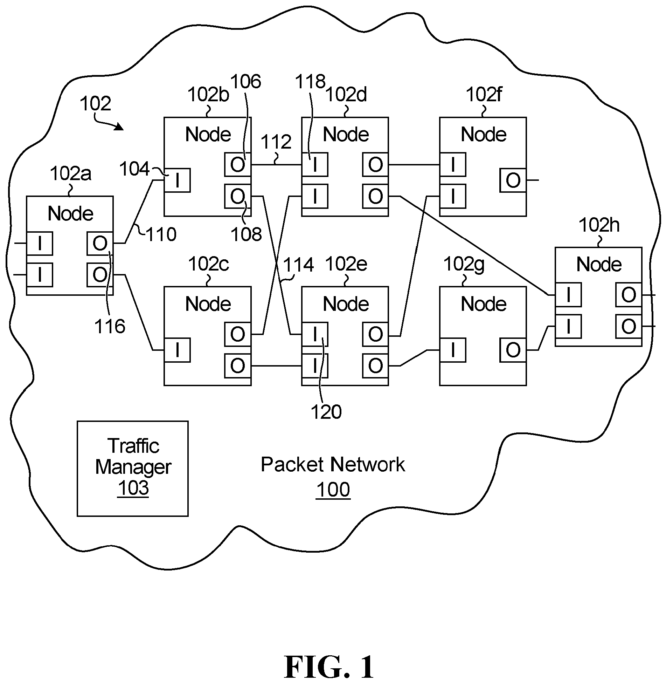

FIG. 1 is a block diagram of a packet network 100 . The packet network 100 includes several network entities, which are called nodes 102. Eight nodes 102 are illustrated in FIG. 1, and are labelled 102a to 102h. In actual implementation, there may be more or fewer nodes 102. Each one of the nodes 102 includes at least one input port and at least one output port. Each input port of each one of the nodes 102 is labelled as "I", and each output port of each one of the nodes is labelled as "O". At least some of the output ports of some of the nodes are coupled to input ports of other nodes via communication links. For example, node 102b has one input port 104 and two output ports 106 and 108. A packet may be received at node 102b from link110 through input port 104. The packet may then be transmitted from node 102b through output port 106 and onto link 112. The packet may instead or also be transmitted from node 102b through output port 108 and onto link 114. Link 110 is coupled to output port 116 of node 102a, link 112 is coupled to input port 118 of node 102d, and link 114 is coupled input port 120 of node 102e. The links 110, 112, and 114 may be physical or wireless. In FIG. 1, each one of the nodes 102 is only illustrated as having maximum two input ports and maximum two output ports. In actual implementation, a node may have several more input ports and/or several more output ports. It should also be understood that although input and output ports are shown as each serving only a single link to another network entity, the input and output ports could be used to transmit packets through a common bus to a variety of different destinations. If input and output ports make use of a network interface such as Ethernet, the input and output ports may be part of the same network interface.

The packet network 100 further includes a traffic manager 103. The traffic manager 103 is communicably coupled to each one of the nodes 102 such that the traffic manager 103 is able to send messages to and receive messages from each one of the nodes 102. The communication path between the traffic manager 103 and the nodes 102 is not illustrated in FIG. 1 for clarity.

In operation, several packet flows traverse the packet network 100. Some of the packet flows may originate at a source outside the network 100, terminate at a destination also outside the network 100, and pass through the network 100 at some point between the source and destination. For example, a low priority packet flow originating at a webserver in one country and terminating at a computer in another country may flow through network 100 on the path from the source to the destination. The flow may enter network 100 at node 102a and exit network 100 at 102f. Other packet flows may originate and/or terminate in the network 100. For example, a packet flow may originate at node 102a and terminate at node 102g.

The traffic manager 103 implements a traffic managing function to manage the packet flows in the network 100. For each packet flow in the network 100, the traffic manager 103 may determine which path the flow will follow in the network 100. For example, if a packet flow enters network 100 at node 102a and exits network 100 at node 102f, the traffic manager 103 may determine that the packet flow is to travel from node 102a to node 102b, then to node 102e, and then to node 102f. The traffic manager 103 may then send a message to node 102a instructing node 102a to forward any packets from the flow to output port 116 so that the packets are transmitted to node 102b over link 110. The traffic manager 103 may also send a message to node 102b instructing node 102b to forward any packets from the flow to output port 108 so that the packets are transmitted from node 102b to node 102e over link 114, and so on.

Sometimes there may be a packet flow that is jitter sensitive. By "jitter sensitive" it is meant that the delay variation between the packets must be within a certain tolerance. The words "jitter" and "delay variation" will be used interchangeably. There will always be delay (also referred to as latency) between the time at which a packet is sent from the source and the time at which that packet arrives at the destination. The flow is jitter sensitive when the amount by which that delay varies, packet-to-packet, must be within a certain tolerance. For example, the source of the jitter sensitive packet flow may be node 102a, and the destination may be node 102f. The source may transmit four packets equally spaced in time. If each one of the four packets is received at node 102f exactly 100µs after that packet is transmitted from node 102a, then the jitter of the packet flow is zero. However, if one of the four packets takes 110µs to travel between source node 102a and destination node 102f, and another one of the four packets takes 90µs to travel between source node 102a and destination node 102f, then the jitter of the packet flow is 110µs-90µs = 20µs. It may be the case that the destination node 102f has a requirement for the flow that the jitter be within 10µs. The jitter tolerance would not be met. A jitter sensitive packet flow may sometimes be called a jitter sensitive connection.

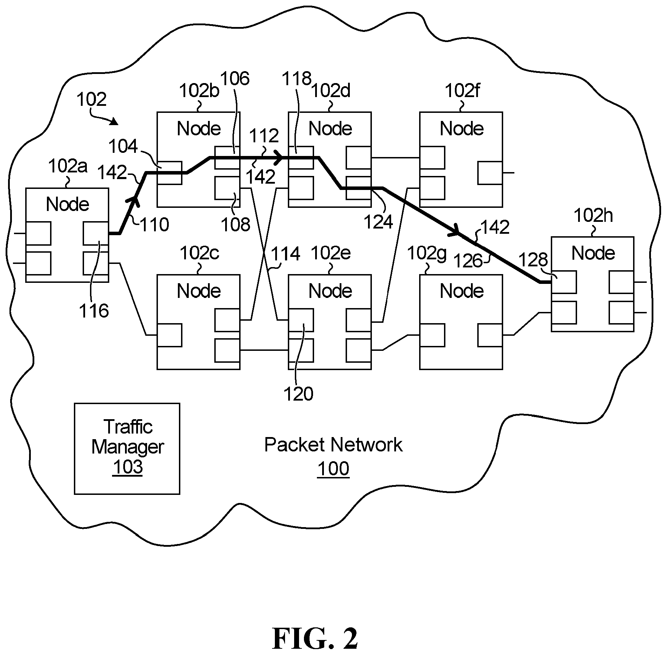

FIG. 2 is a block diagram of the packet network 100 of FIG. 1, but illustrating an example jitter-sensitive packet flow 142 that is present between node 102a and node 102h. In this embodiment, the jitter-sensitive packet flow 142 originates at node 102a and terminates at node 102h. Alternatively, jitter-sensitive packet flow 142 may originate and/or terminate outside the network 100. The path of the jitter-sensitive packet flow 142 through the network 100 is determined by the traffic manager 103. In this embodiment, the jitter-sensitive packet flow 142 travels from node 102a through output port 116, over link 110 and through input port 104 of node 102b, then through output port 106 of node 102b, over link 112, and through input port 118 of node 102d, then through output port 124 of node 102d, over link 126, and through input port 128 of node 102h.

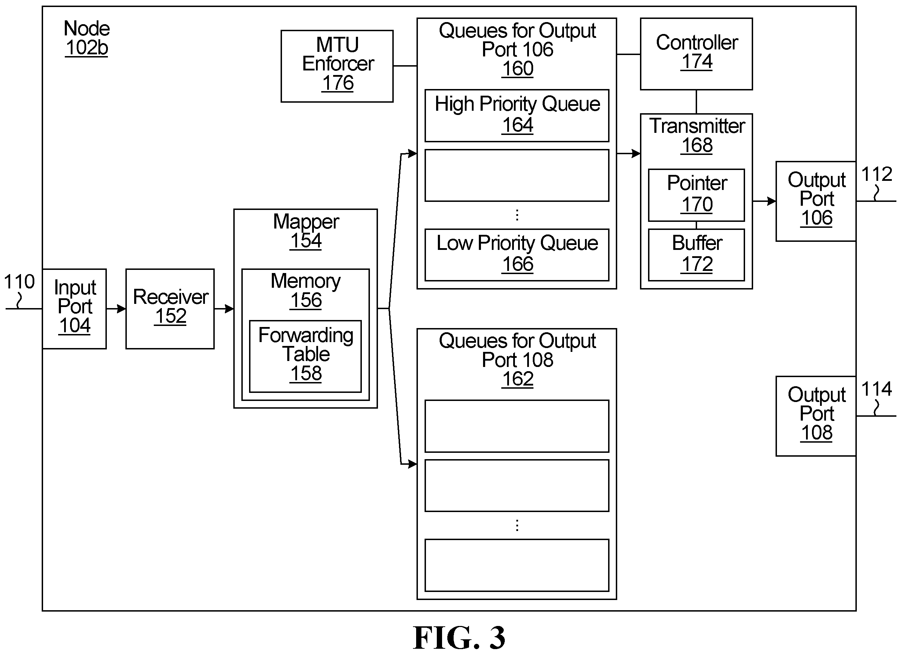

FIG. 3 is a block diagram of node 102b of FIG. 2, according to one embodiment of the invention. Node 102b includes input port 104 coupled to link 110. A receiver 152 is coupled to input port 104. A mapper 154 is coupled to receiver 152. The mapper 154 includes memory 156 that stores a forwarding table 158. The mapper 154 is coupled to two groups of queues: a group of queues 160 that is to store packets for transmission through output port 106, and another group of queues 162 that is to store packets for transmission through output port 108. The group of queues 160 that stores packets for transmission through output port 106 include queues associated with different transmission priority. For example, queue 164 is a high priority queue and queue 166 is a low priority queue. The group of queues 160 are coupled to a transmitter 168 that includes a pointer 170 and a buffer 172. The output of the transmitter 168 is coupled to the output port 106. A controller 174 is coupled to the group of queues 160 and transmitter 168. An MTU enforcer 176 is also coupled to the group of queues 160. The node 102b also includes a transmitter, controller, and MTU enforcer for output port 108 and the group of queue 162, but these elements have been omitted for the sake of clarity. The node 102b may also include other components not illustrated or described for the sake of clarity. The input port 104 is a physical port, through which a signal may pass, that connects the receiver 152 to the link 110, so that a signal on the link can be transmitted to the receiver 152. The receiver 152, the mapper 154, the transmitter 168, the controller 174, and the MTU enforcer 176 may each be implemented using a processor that executes instructions to cause the processor to perform the respective operations of the receiver 152, the mapper 154, the transmitter 168, the controller 174, and the MTU enforcer 176. The same processor may be used to implement each one of the receiver 152, the mapper 154, the transmitter 168, the controller 174, and the MTU enforcer 176. Alternatively, different processors may be used to implement one or some of the receiver 152, the mapper 154, the transmitter 168, the controller 174, and the MTU enforcer 176. Alternatively, the receiver 152, the mapper 154, the transmitter 168, the controller 174, and the MTU enforcer 176 may each be dedicated integrated circuity, such as an application specific integrated circuit (ASIC), a graphics processing unit (GPU), or a programmed field programmable gate array (FPGA) for performing the respective operations of the receiver 152, the mapper 154, the transmitter 168, the controller 174, and the MTU enforcer 176. One set of integrated circuity may be dedicated to implementing all of the receiver 152, the mapper 154, the transmitter 168, the controller 174, and the MTU enforcer 176. Alternatively, different integrated circuitry may be used to implement one or some of the receiver 152, the mapper 154, the transmitter 168, the controller 174, and the MTU enforcer 176.

The queues can be implemented by memory or physical registers. The output port 106 is a physical port, through which a signal may pass, that connects transmitter 168 of node 102b to the link 112, so that a signal can be transmitted to the link 112. Similarly, the output port 108 is a physical port, through which a signal may pass, that connects node 102b to the link 114, so that a signal can be transmitted to the link 114.

The node 102b also includes a receiver for receiving messages from the traffic manager 103. The receiver may be a dedicated receiver (not illustrated), or the receiver may be receiver 152 if the messages from the traffic manager 103 arrive via link 110. For example, as described below, the traffic manager 103 may send a message to node 102b instructing node 102b to modify the MTU value for output port 106. The receiver forwards the message to the MTU enforcer 176. The node 102b also includes a transmitter for transmitting messages to the traffic manager 103. The transmitter may be a dedicated transmitter (not illustrated), or the transmitter may be transmitter 168 if the messages are sent via link 112. For example, as described below, the node 102b may send a message to the traffic manager 103 indicating the current MTU size of output port 106 and/or the link speed of link 112 and/or whether the node 102b is capable of performing pre-emption for packets transmitted through output port 106. The message may be transmitted using the transmitter of the node 102b.

In operation, when a packet is received at input port 104 via link 110, the packet is received by receiver 152. Receiver 152 implements the physical operations necessary to receive the packets. The specific operations actually implemented by receiver 152 is implementation specific and dependent upon the nature of the link 110, e.g. whether the link 110 is optical, wireless, copper line, etc. However, in one embodiment, the operations of the receiver 152 include extracting the packet from the signal received at the input port 104, e.g. demodulation and decoding, to obtain the packet in digital form in the electrical domain. The packet is forwarded from the receiver 152 to the mapper 154. The mapper 154 reads a marker in the packet to identify the packet and determines that the packet is to be forwarded to another node. The mapper 154 uses the marker to query the forwarding table 158. The forwarding table 158 is a look-up table that indicates, for each packet to be forwarded, which queue of which output port the packet should be stored in. In one example, the packet is a packet from the jitter sensitive packet flow 142, and the forwarding table 158 indicates that a packet from flow 142 is to be stored in high priority queue 164. The mapper 154 therefore forwards the packet to queue 164. If the packet were instead from another flow, the forwarding table 158 may indicate that the packet is to be stored in another queue instead, e.g. perhaps in low priority queue 166, or perhaps in one of the queues for output port 108.

There is an MTU size associated with output port 106. The MTU enforcer 176 sets the MTU size for output port 106 and enforces the MTU size. Whenever a packet stored in one of the queues 160 is to be transmitted, the MTU enforcer 176 first compares the size of the packet to the set MTU size. If the size of the packet is greater than the set MTU size, then the MTU enforcer 176 performs one of the following two operations:
(1) The MTU enforcer 176 stops the packet from being transmitted and discards the packet. If the packet is discarded without informing the entity from which the packet originated, then the discarding is referred to as silent discarding. Alternatively, when a packet is discarded, the MTU enforcer 176 may instruct the node 102b to send a message to the entity from which the packet originated. The message may indicate that the packet has been discarded because the size of the packet exceeded the MTU size.
(2) The MTU enforcer 176 may instead fragment the packet into two or more smaller packets prior to transmission. This is referred to as fragmentation. The size of each of the two or more smaller packets is chosen to be no greater than the set MTU size. Each one of the smaller packets may then be transmitted through the output port 106 instead of the original packet that exceeded the set MTU size.

The transmitter 168 transmits packets, stored in the group of queues 160, through the output port 106. Packets can be retrieved and stored in the buffer 172 prior to transmission. The pointer 170 is initialized to the start of a packet stored in the buffer 172. The pointer 170 then increments and the packet is read out of the buffer 172. As each portion of the packet is read out of the buffer 172, the transmitter 168 performs the operations necessary to send that portion of the packet through the output port 106 and onto the link 112. The specific operations performed by the transmitter 168 are implementation specific and depend upon the nature of the link 112, e.g. whether the link 112 is optical, wireless, copper line, etc. However, the operations of the transmitter 168 in one embodiment include encoding and modulating the packet bits onto a signal suitable for the medium of the link 112. For example, the transmitter 168 may encode the packet bits using an error control code, and then modulate the encoded bits by mapping the bits to transmission symbols using a modulation scheme, and then send the modulated symbols onto the link 112.

The controller 174 controls which packet is sent from the group of queues 160 to the transmitter 168. When the pointer 170 of the transmitter 168 has incremented to the end of the buffer 172, this indicates to the controller 174 that the transmitter 168 is finished transmitting a packet through the output port 106, and the output port 106 is no longer occupied. The controller 174 queries the status of each of the queues in the group of queues 160. One of the following three scenarios is possible:
(1) When the controller 174 queries the status of each of the queues in the group of queues 160, there are no packets in any of the queues. The controller 174 waits for the arrival of a packet at any one of the queues of the group of queues 160, and then immediately instructs that packet to be forwarded to the buffer 172 of the transmitter 168.
(2) When the controller 174 queries the status of each of the queues in the group of queues 160, there are only packets (or only one packet) in one queue of the group of queues 160, and the rest of the queues of the group of queues 160 are empty. The controller 174 instructs the next packet from the non-empty queue to be transmitted. For example, there may only be packets stored in low priority queue 166. The controller 174 therefore instructs the next packet in low priority queue 166 to be forwarded to buffer 172 of the transmitter 168.
(3) When the controller 174 queries the status of each of the queues in the group of queues 160, there are one or more packets in each of at least two queues of the group of queues 160. The controller 174 therefore selects which packet to transmit next based on a scheduling algorithm implemented by the controller 174. For example, the controller 174 may always select a packet in a higher priority queue over a packet in a lower priority queue. The scheduling algorithm is implementation specific. As one example, if there are two packets waiting to be transmitted through output port 106, one in high priority queue 164 and another in low priority queue 166, then the controller 174 may select the packet in the high priority queue 164 first. However, if packets stored in the low priority queue 166 become too stale, then the controller 174 may select a packet in the low priority queue 166 over a packet in the high priority queue 164.

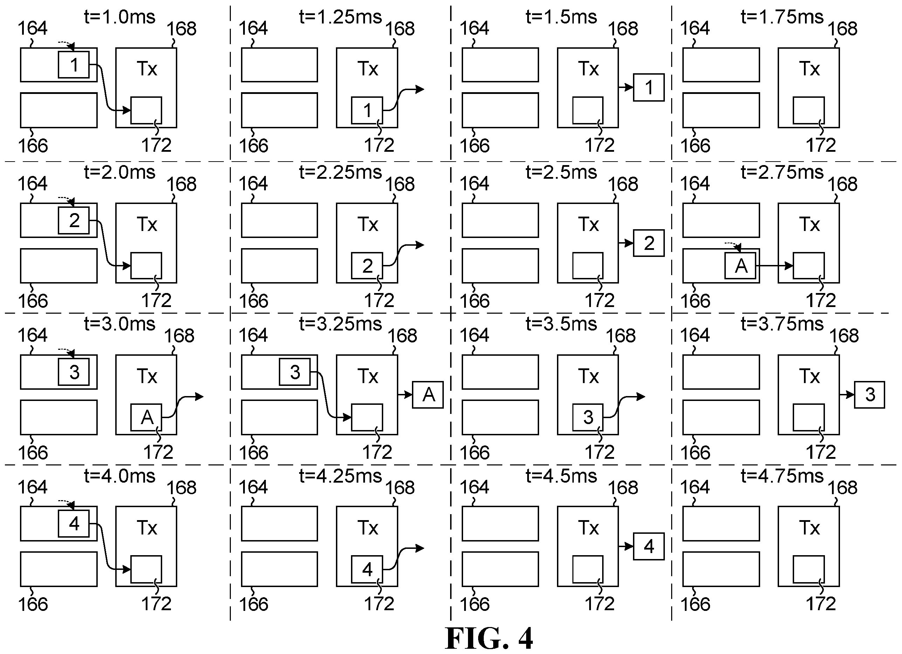

The MTU size associated with the output port 106 may contribute to jitter in a packet flow. To assist in understanding this, reference is made to FIG. 4. FIG. 4 is an example timeline illustrating high priority queue 164, low priority queue 166, and transmitter 168 at different points in time. In this example, a jitter sensitive packet flow includes four packets, labelled 1, 2, 3, and 4 in FIG. 4. The packets are received in the high priority queue 164 one millisecond (ms) apart from each other, and each packet takes 0.5ms for the transmitter 168 to transmit.

Packet 1 from the jitter sensitive packet flow arrives in high priority queue 164 at t=1.0ms and is transmitted at the next available transmission time. Because the transmitter 168 is not transmitting another packet at this time, packet 1 is transmitted right away. Transmission of packet 1 takes 0.5ms, and so the transmitter 168 is ready to transmit another packet at t=1.5ms. However, at t=1.5ms there are no packets in queues 164 or 166 to transmit.

Packet 2 from the jitter sensitive packet flow arrives in high priority queue 164 at t=2.0ms and is transmitted right away because the transmitter 168 is not transmitting any other packet. Transmission of packet 2 takes 0.5ms, and so the transmitter 168 is ready to transmit another packet at t=2.5ms. However, at t=2.5ms there are no packets in queues 164 or 166 to transmit.

At t=2.75ms another packet A from another lower priority flow arrives at low priority queue 166 and is transmitted right away because the transmitter 168 is not transmitting any other packet. In this example, packet A also happens to be the same size as the jitter sensitive packets and therefore takes 0.5ms for the transmitter 168 to transmit.

Packet 3 from the jitter sensitive packet flow arrives in high priority queue 164 at t=3.0ms. However, at t=3.0ms the transmission of packet A is still occurring, i.e., the transmitter 168 has not yet completed serialization of all the bits of packet A onto the link 112. Packet 3 cannot be transmitted until packet A is finished being transmitted, which occurs at t=3.25ms. Transmission of packet 3 takes 0.5ms, and so the transmitter 168 is ready to transmit another packet at t=3.75ms. However, at t=3.75ms there are no packets in queues 164 or 166 to transmit.

Packet 4 from the jitter sensitive packet flow arrives in high priority queue 164 at t=4.0ms and is transmitted right away because the transmitter 168 is not transmitting any other packet. Transmission of packet 4 takes 0.5ms.

The duration of time between when packet 1 is finished being transmitted and packet 2 is finished being transmitted is 1ms. However, due to the intervening transmission of packet A, the duration of time between when packet 2 is finished being transmitted and packet 3 is finished being transmitted is 1.25ms. Also, the duration of time between when packet 3 is finished being transmitted and packet 4 is finished being transmitted is 0.75ms. Therefore, a delay variation, i.e. the jitter, between arrivals of packets of the jitter sensitive packet flow spans 1.25ms-0.75ms=0.5ms. Depending upon the tolerance of the jitter accepted by the destination, this amount of jitter may be undesirable or unacceptable.

The amount of delay variation experienced by packets 1 to 4 of the jitter sensitive packet flow may be partly addressed by high priority treatment of packets 1 to 4, i.e. storing packets 1 to 4 in high priority queue 164. That is, in some embodiments, the jitter sensitive packet flow may be designated high priority. However, the amount of delay variation is also affected by the MTU size of the output port 106. In the FIG. 4 example, the larger the packet A, the longer it takes for packet A to be transmitted through the output port 106. The longer it takes for packet A to be transmitted through the output port 106, the greater the delay variation. In the FIG. 4 example, packet A had a size equal to the size of packets of the jitter sensitive packet flow. However, more generally packet A may have a much larger size, as long as the size of packet A does not exceed the MTU size of the output port 106. A low priority large packet in the process of being transmitted may potentially introduce large jitter in the higher priority jitter sensitive traffic.

It may be possible to always have the MTU size of the output port 106 set to a small value to try to reduce the jitter. However, always keeping the MTU size at a small value may not be efficient when no jitter sensitive packet flow is present. Therefore, the MTU size of the output port 106 may be maintained at a standard or large value, except when a jitter sensitive packet flow is utilizing the output port 106, in which case the MTU enforcer 176 may set the MTU size of the output port 108 to a smaller MTU value. This will reduce the size of packets that can be transmitted through the output port 106 when the jitter sensitive packet flow is present and therefore may help reduce the jitter introduced into the jitter sensitive packet flow. In the FIG. 4 example, the maximum size of packet A would be capped by the smaller MTU size when the jitter sensitive packet flow is present. If packet A has a size larger than the smaller MTU size, then the MTU enforcer 176 discards or fragments packet A.

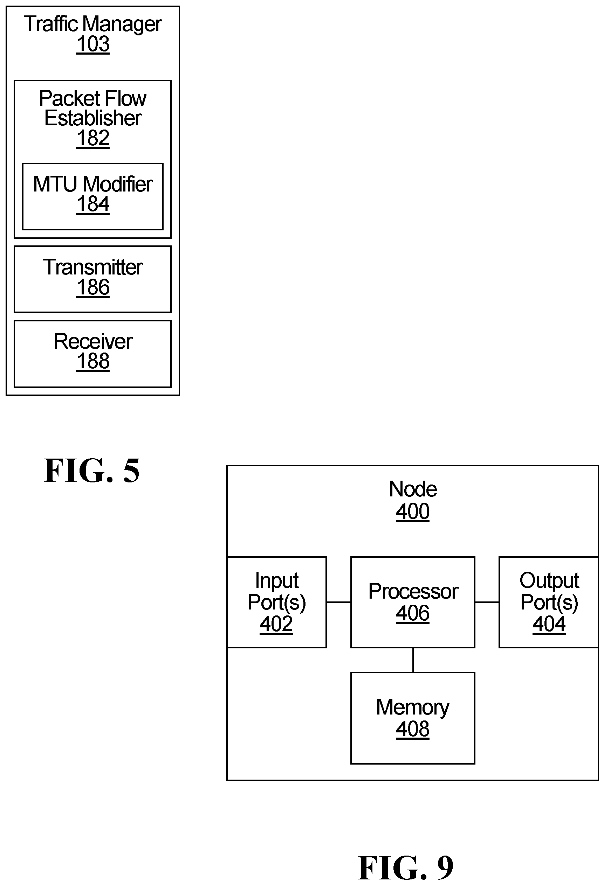

FIG. 5 is a block diagram of the traffic manager 103, according to one embodiment. The traffic manager 103 may be a software defined networking (SDN) controller, another type of SDN entity, or another entity performing a traffic managing function, e.g. an operation, administration, and management (OAM) entity. An OAM entity is also sometimes referred to as an operation, administration, and maintenance entity.

The traffic manager 103 includes a packet flow establisher 182 that implements a traffic engineering function by performing the operations described herein. The packet flow establisher 182 includes an MTU modifier 184. The traffic manager 103 further comprises a transmitter 186 for transmitting messages from the traffic manager 103 to the nodes 102, as well as a receiver 188 for receiving messages from the nodes 102. The traffic manager 103 includes other components that have been omitted for the sake of clarity.

The packet flow establisher 182 may be implemented using a processor that executes instructions that cause the processor to perform the operations of the packet flow establisher 182. Alternatively, the packet flow establisher 182 may be dedicated integrated circuity, such as an ASIC, a GPU, or a FPGA for performing the operations of the packet flow establisher 182. Similarly, the MTU modifier 184 may be implemented using a processor that executes instructions that cause the processor to perform the operations of the MTU modifier 184. Alternatively, MTU modifier 184 may be dedicated integrated circuity, such as an ASIC, a GPU, or a FPGA for performing the operations of the MTU modifier 184. The packet flow establisher 182 and the MTU modifier 184 may be implemented using the same processor or the same set of integrated circuitry. Alternatively, the packet flow establisher 182 and the MTU modifier 184 may be implemented using a different processor or different integrated circuitry. In some embodiments described below, the packet flow establisher 182 or the MTU modifier 184 send a message to one or more of the nodes 102. This means that the message from the packet flow establisher 182 or the MTU modifier 184 is sent to the transmitter 186 of the traffic manager 103, and the transmitter 186 of the traffic manager 103 transmits the message. Similarly, when a response is sent by one of the nodes 102 and received by the packet flow establisher 182 or the MTU modifier 184, the response is received by the receiver 188 of the traffic manager 103, and the receiver 188 forwards the response to the packet flow establisher 182 or the MTU modifier 184. The transmitter 186 performs encoding and modulating of a message so that the message is modulated onto a signal for transmission. The receiver 188 performs demodulating and decoding of the signal carrying a message in order to obtain the message. The transmitter 186 and the receiver 188 may each be implemented by dedicated integrated circuitry or a processor that executes instructions to perform the operations of the transmitter 186 and the receiver 188. The transmitter 186 and the receiver 188 may be combined into a single transceiver.

In operation, the traffic manager 103 receives a message from one of the nodes 102 in the network 100. The message requests that the traffic manager 103 establish a packet flow between a particular output port of that node and a particular input port of another node in the network 100. In this example, the packet flow is a jitter sensitive packet flow. The packet flow establisher 182 determines that the packet flow is a jitter sensitive packet flow. The packet flow establisher 182 also determines the flow path of the packet flow in the network 100. The MTU modifier 184 then sends a message to at least one of the nodes in the flow path instructing that node to reduce the MTU size associated with the output port utilized by the jitter sensitive packet flow.

Additional detailed example methods performed by the traffic manager 103 and the nodes 102 in the network 100 are now described.

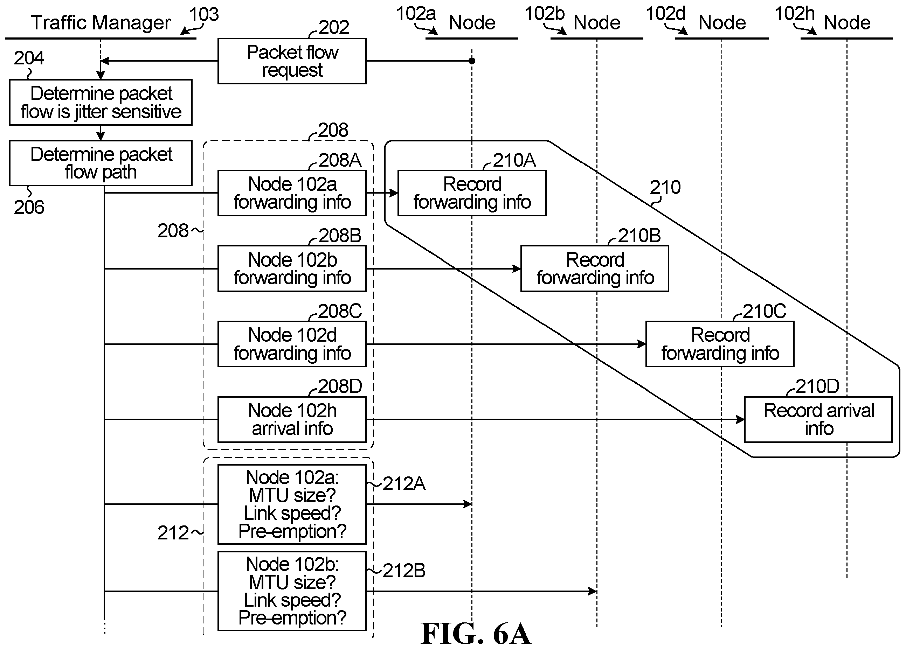

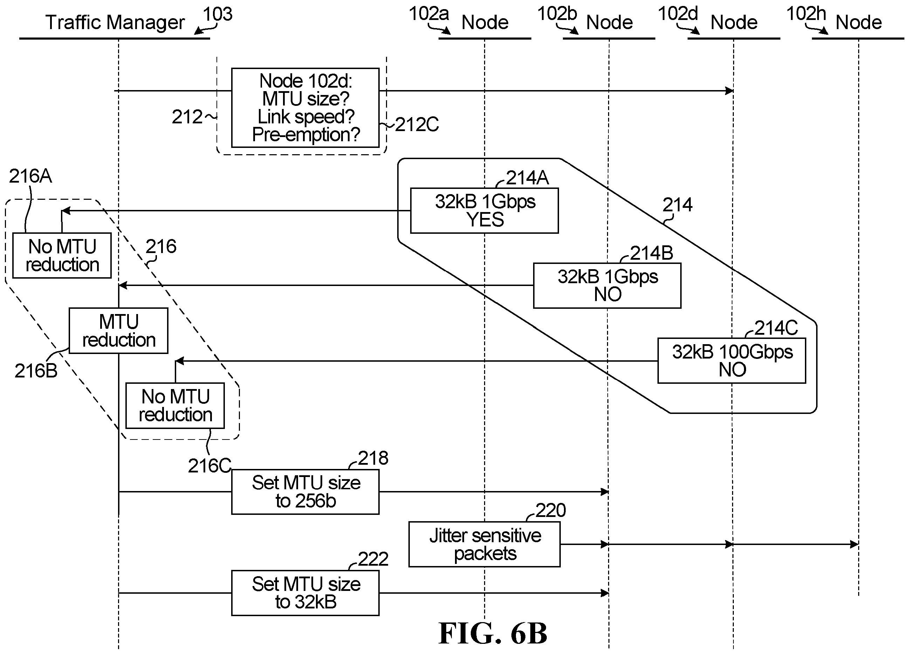

FIG. 6, which consists of FIGs. 6A and 6B, is a flowchart of operations performed by the traffic manager 103 and nodes 102a, 102b, 102d, and 102h, according to one embodiment.

In step 202, node 102a sends a "packet flow request" message to the traffic manager 103 requesting that a packet flow be established between node 102a and node 102h. In some embodiments, the packet flow request message indicates specifically which output port of node 102a the flow is to use and/or which input port of node 102h the flow is to use. For example, the message may request that a packet flow be established between output port 116 of node 102a and input port 128 of node 102h. Alternatively, the packet flow request message may not indicate specifically which output port of node 102a the flow is to use and/or which input port of node 102h the flow is to use.

If the packet flow instead originated at a source entity outside the network 100, then alternatively the source entity may send the packet flow request message in step 202, or the source entity may instruct the node 102a to send the packet flow request message in step 202.

In step 204, the packet flow establisher 182 of the traffic manager 103 determines that the requested packet flow is a jitter sensitive packet flow. In some embodiments, the message sent in step 202 explicitly indicates that the packet flow is a jitter sensitive packet flow, in which case the packet flow establisher 182 determines that the requested packet flow is jitter sensitive by reading this indication in the message. In other embodiments, the packet flow establisher 182 determines that the requested packet flow is a jitter sensitive packet flow based on the type of packet flow requested, or based on the properties of the requested packet flow, or based on the fact that the requested packet flow originates at node 102a, or based on the fact that the requested packet flow terminates at node 102h, or based on some combination of the previously listed factors.

In step 206, the packet flow establisher 182 of the traffic manager 103 determines the path that the requested packet flow will use to travel from node 102a to node 102h. There are different methods that may be used by the packet flow establisher 182 in order to select the flow path. For example, the packet flow establisher 182 may try to minimize a hop count metric, i.e. choose a path that travels through the least number of nodes 102 in the network 100. Another factor that may be considered in the path selection method is the available bandwidth on the candidate path. In one embodiment, the path is computed by the packet flow establisher 182 using various constrained shortest path methods. This is accomplished by the packet flow establisher 182 first constructing a complete graph of the topology of the nodes 102, including all the nodes and links, as well as the available capacity on the links and a cost factor of traversing each link. When a path must be computed that requires a certain amount of bandwidth, the links in the graph which do not have sufficient capacity to support this path are removed from the graph. Then a shortest path algorithm, such as Dijkstra's algorithm, is executed on the remaining topology. This ensures that the selected path is the shortest (minimum sum of costs) of those which can support the bandwidth requirements of the path. There are other non-Dijkstra methods that are possible, e.g. linear program based methods.

For the sake of example, in this embodiment the packet flow establisher 182 determines that the jitter sensitive packet flow will use path 142 illustrated in FIG. 2.

In step 208, the packet flow establisher 182 sends a respective message to each one of the nodes on the jitter sensitive packet flow path 142. The respective message provides the necessary information for forwarding the packets of the jitter sensitive packet flow along the determined path. Step 208 consists of steps 208A, 208B, 208C, and 208D. In step 208A, a message is sent to node 102a instructing node 102a to forward any packet of the jitter sensitive packet flow through output port 116. In step 208B, a message is sent to node 102b instructing node 102b to forward any packet of the jitter sensitive packet flow that arrives at input port 104 through output port 106. In step 208C, a message is sent to node 102d instructing node 102d to forward any packet of the jitter sensitive packet flow that arrives at input port 118 through output port 124. In step 208D, a message is sent to node 102h instructing node 102h that the jitter sensitive packet flow will arrive at input port 128.

In step 210, each one of the nodes on the jitter sensitive packet flow path 142 records the information sent at step 208. Step 210 consists of steps 210A, 210B, 210C, and 210D. In step 210A, node 102a records in a memory (not illustrated) to forward any packet of the jitter sensitive packet flow through output port 116. In step 210B, node 102b records in a memory to forward any packet of the jitter sensitive packet flow that arrives at input port 104 through output port 106. For example, the instruction to forward any packet of the jitter sensitive packet flow that arrives at input port 104 through output port 106 may be recorded in forwarding table 158 illustrated in FIG. 3. In step 210C, node 102d records in a memory to forward any packet of the jitter sensitive packet flow that arrives at input port 118 through output port 124. In step 210D, node 102h records in a memory that the jitter sensitive packet flow will arrive at input port 128.

In step 212, the MTU modifier 184 of the traffic manager 103 sends a respective message, querying MTU size, link speed of the output port, and pre-emption capability, to each one of nodes 102a, 102b, and 102d on the jitter sensitive packet flow path 142. Step 212 consists of steps 212A, 212B, and 212C.

In step 212A, a message is sent to node 102a requesting the current MTU size of output port 116, requesting the link speed of link 110, and enquiring whether or not the node 102a is capable of performing pre-emption for packets transmitted through output port 116. A node in a network may or may not have pre-emption capability. If node 102a is capable of performing pre-emption for packets transmitted through output port 116, this means that node 102a has the functionality to be able to halt the transmission of a first packet before the first packet is finished being transmitted through output port 116, transmit a second packet, and then finish transmitting the first packet once the second packet has completed transmission. For example, referring to FIG. 4 at time t=3.0ms, if node 102b was capable of performing pre-emption, then transmission of packet A may be halted, jitter sensitive packet 3 may be transmitted immediately after jitter sensitive packet 3 arrived at queue 164 at t=3.0ms, and then once jitter sensitive packet 3 was transmitted, the rest of packet A may be transmitted. When pre-emption is performed it may not be necessary to reduce the MTU size associated with the output port. This is because another packet that is in the process of being transmitted can be pre-empted (i.e. have its transmission halted) to allow for the jitter sensitive packet to be transmitted.

In step 212B, a message is sent to node 102b requesting the current MTU size of output port 106, requesting the link speed of link 112, and enquiring whether or not the node 102b is capable of performing pre-emption for packets transmitted through output port 106.

In step 212C, a message is sent to node 102d requesting the current MTU size of output port 124, requesting the link speed of link 126, and enquiring whether or not the node 102d is capable of performing pre-emption for packets transmitted through output port 124.

Step 212 is not necessary in all embodiments. For example, if the information requested in step 212 is already known by the MTU modifier 184, then a message requesting the information does not need to be sent. If some of the information requested in step 212 is already known by the MTU modifier 184, and other of the information is not known by the MTU modifier 184, then step 212 may be modified to only request the information not already known by the MTU modifier 184. Also, although a single message is sent to each node in step 212, instead multiple messages may be sent. For example, in step 212A a first message may be sent to node 102a querying the speed of link 110, a second message may be sent to node 102a querying whether or not the node 102a is capable of performing pre-emption for packets transmitted through output port 116, and a third message may be sent requesting the current MTU size of output port 116.

When step 212 is performed, then step 214 is also performed. In step 214, each one of nodes 102a, 102b, and 102d sends a response to the message sent in step 212. Step 214 consists of steps 214A, 214B, and 214C. For the sake of example, in this embodiment the following responses are sent in 214A, 214B, and 214C.

In step 214A, node 102a sends a response indicating the current MTU size of output port 116 is 32 kilobytes, the link speed of link 110 is 1 gigabits per second (Gbps), and the node 102a is capable of performing pre-emption for packets transmitted through output port 116.

In step 214B, node 102b sends a response indicating the current MTU size of output port 106 is 32 kilobytes, the link speed of link 112 is 1 Gbps, and the node 102b is not capable of performing pre-emption for packets transmitted through output port 106.

In step 214C, node 102d sends a response indicating the current MTU size of output port 124 is 32 kilobytes, the link speed of link 112 is 100 Gbps, and the node 102d is not capable of performing pre-emption for packets transmitted through output port 106.

In step 216, the MTU modifier 184 uses the information received in step 214 to determine, for each output port on the jitter sensitive flow path, whether or not the MTU size for the output port should be reduced. Step 216 consists of steps 216A, 216B, and 216C.

In step 216A, the MTU modifier 184 determines that the MTU size of output port 116 should not be reduced because the node 102a is capable of performing pre-emption for packets transmitted through output port 116. The MTU modifier 184 may send node 102a a message (not illustrated) instructing node 102a to enable pre-emption for output port 116, if pre-emption for output port 116 is not currently enabled.

In step 216B, the MTU modifier 184 determines that the MTU size of output port 106 should be reduced because: (i) the node 102b is not capable of performing pre-emption for packets transmitted through output port 106, and (ii) the current MTU size of output port 106 (32 kilobytes) is above a first predetermined threshold, and (iii) the link speed of link 112 (1 Gbps) is below a second predetermined threshold. The first predetermined threshold is set to stop the MTU size from being reduced if the current MTU size is already small. For example, the first predetermined threshold may be 256 bytes. If the current MTU size was below 256 bytes then the MTU size would not be further reduced. The second predetermined threshold is set to stop the MTU size from being reduced if the link speed is fast. For example, the second predetermined threshold may be 50 Gbps. If the speed of link 112 was above 50 Gpbs, then the MTU size would not be reduced. A high speed link means that a packet can be transmitted quickly, and so if a jitter sensitive packet arrives at the queue of the output port just after a large lower priority packet begins to be transmitted, then the delay incurred by the jitter sensitive packet having to wait will be relatively small because the large lower priority packet can be transmitted quickly due to the high link speed.

In step 216C, the MTU modifier 184 determines that the MTU size of output port 124 should not be reduced because the link speed of link 126 (100 Gbps) is above the second threshold.

In step 216, the MTU modifier 184 determines that the MTU size of an output port is to be reduced only when all of the following are satisfied: (a) pre-emption cannot be performed, (b) the current MTU size is above a first predetermined threshold (i.e. the current MTU size is not too small), and (c) the link speed is below a second predetermined threshold (i.e. the link speed is not too fast). In an alternative embodiment, the MTU modifier 184 may determine that the MTU size of the output port is to be reduced when only one or a subset of factors (a) to (c) is satisfied. For example, the MTU modifier 184 may determine that the MTU size is to be reduced whenever pre-emption cannot be performed, regardless of the current MTU size and the link speed.

In the example described in step 216, the MTU modifier 184 only determines that the MTU size of output port 106 of node 102b is to be reduced. In step 218, the MTU modifier 184 therefore transmits a message to node 102b instructing node 102b to set the MTU size of output port 106 to a MTU value that is smaller than the current MTU size of output port 106. The current MTU size of the output port 106 is 32 kilobytes. As an example, the MTU modifier 184 instructs node 102b to set the MTU size of output port 106 to 256 bytes. In some embodiments, the exact value to which the MTU size is reduced is determined by the MTU modifier 184 as a function of the speed of the link 112. The faster the speed of link 112, the smaller the reduction in the MTU size. In this example, based on the link speed of link 112 of 1 Gbps, the MTU modifier 184 determines that the MTU size of the output port 106 is to be reduced to 256 bytes. If the speed of link 112 were higher, then the MTU size may not be reduced as much. For example, if the speed of link 112 were 10 Gbps, then the MTU modifier 184 may reduce the MTU size to 1500 bytes instead.

In step 220, packets of the jitter sensitive packet flow travel from node 102a to node 102h through path 142. Each node on the path 142 forwards the packets of the jitter sensitive packet flow in the manner instructed by the packet flow establisher 182 in step 208.

Output port 106 has a reduced MTU size of 256 bytes. With reference to FIG. 3, the MTU enforcer 176 of node 102b discards or fragments any packet having a size greater than 256 bytes that is to be transmitted through the output port 106. Even if packets from other flows different from the jitter sensitive packet flow are to be transmitted through output port 106, these packets are also discarded or fragmented if they are larger than 256 bytes. Every packet received at node 102b, that is from the jitter sensitive flow, is sent to high priority queue 164 so that the jitter sensitive flow packets will be forwarded with high priority to help mitigate delay variation.

The jitter sensitive packet flow has packet sizes no greater than the smallest reduced MTU on the packet flow path (e.g. 256 bytes in the FIG. 6 embodiment). However, the packets of other flows may have a size larger than the reduced MTU size. When another flow has packets that are larger than the reduced MTU size, and the packets are therefore discarded or fragmented, then the end points of the flow may trigger IP MTU discovery. The IP MTU discovery may be triggered due to explicit loss of the packets that are discarded, or via an Internet Control Message Protocol (ICMP) "frame too big" response. Therefore, there may be some loss on a low priority flow until the low priority flows adapt to the smaller MTU. However, in exchange the smaller MTU may help mitigate jitter in the jitter sensitive packet flow when the jitter sensitive packet flow is present.

Eventually, the jitter sensitive packet flow will terminate. When this happens, at step 222, the MTU modifier 184 sends a message to node 102b instructing node 102b to set the MTU size of port 106 back to 32 kilobytes.

In the embodiment described in FIG. 6, the following may be achieved. If a jitter sensitive packet flow is created that utilizes an output port/link that carries large MTU traffic, then the MTU of the output port/link may be decreased for the duration of the existence of the jitter sensitive packet flow. Therefore, jitter sensitive traffic may be accommodated without upgrading hardware in the nodes of the jitter sensitive path. For example, a node on the jitter sensitive path does not have to have the node hardware upgraded to support pre-emption. Efficiencies associated with having a higher MTU may be realized when a jitter sensitive path is not present. The MTU may just be reduced when the jitter sensitive path is present.

In the embodiment described in FIG. 6, the traffic manager 103 communicates directly with each one of the nodes in the jitter sensitive flow path. For example, in step 208 of FIG. 6, the traffic manager 103 sends a separate message to each one of nodes 102a, 102b, 102d, and 102h with the forwarding/arrival information for that node. Alternatively, the traffic manager 103 may send a message to node 102a that is to be forwarded along the intended jitter sensitive flow path and that configures each node on the jitter sensitive flow path as the message is forwarded from node to node. For example, the message may first configure node 102a, e.g. by instructing node 102a to update the forwarding table of node 102a to set up node cross connections for the flow path, and to reduce the MTU value for node 102a as necessary. Node 102a may then forward the message to node 102b. The message may then configure node 102b, e.g. by instructing node 102b to update the forwarding table of node 102b and reduce the MTU value for node 102b as necessary. Node 102b may then forward the message to node 102d, and so on, until the message has configured each node on the jitter sensitive flow path and thereby establishes the jitter sensitive flow path. Also, other attributes of the nodes on the jitter sensitive flow path may be established by the traffic manager 103. For example, configuration parameters such as the maximum allowable time for a packet to be stored in a queue may be established for packets on the jitter sensitive flow path. Also, in some embodiments, node 102a may determine the packet flow path instead of traffic manager 103.

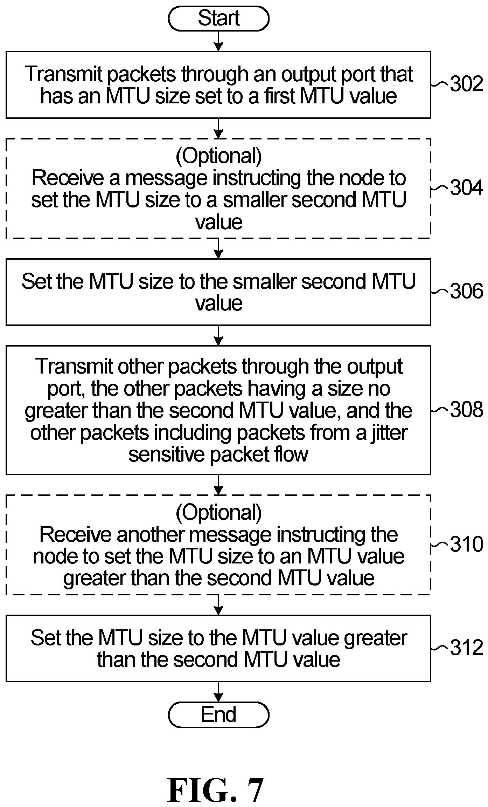

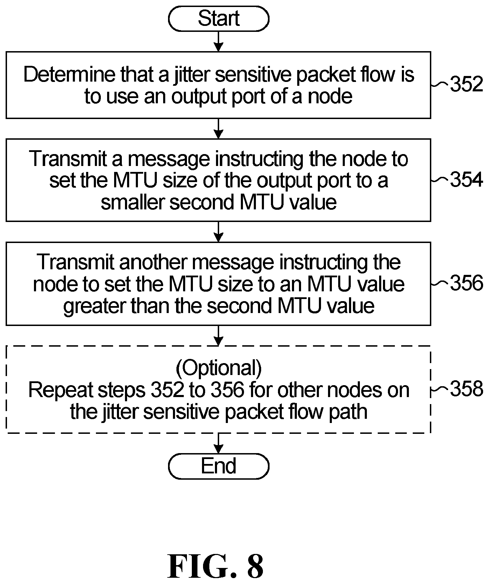

One application in which embodiments may be utilized is as follows. A wireless communication system may include a plurality of radio resource heads (RRHs), or base stations, which wirelessly connect user equipments (UEs) to a network. The network may include a front-haul network and a back-haul network. The back-haul network may be a cloud radio access network (C-RAN). The front-haul network is the network between the RRHs and the back-haul network. The back-haul network may be an Internet Protocol (IP) packet network. Traditionally the front-haul network is not an IP packet network. The front-haul network may instead be a dedicated fiber network. There may be benefits to implementing the front-haul network as an IP packet network. However, a packet flow in the front-haul network that is destined for a UE, via an RRH, may be jitter sensitive. Reducing the MTU size of an entity in the front-haul network, when a jitter sensitive packet flow is present, may suitably accommodate jitter sensitive packet flows in the front-haul network. FIG. 6 illustrates a detailed example method performed by the traffic manager 103 and nodes 102a, 102b, 102d, and 102h. FIGs. 7 and 8 describe method steps that may be respectively performed by entities in a network more generally.

FIG. 7 is a flowchart of operations performed by a network entity. The network entity will be referred to as a node. For example, the method of FIG. 7 may be performed by node 102b.

In step 302, the node transmits packets through an output port of the node. The output port has an MTU size set to a first MTU value, and the packets transmitted through the output port have a size no greater than the first MTU value.

Optionally, in step 304, a message is received from another network entity (e.g. a traffic manager) instructing the node to set the MTU size to a second MTU value that is smaller than the first MTU value. Step 304 may occur when a traffic manager determines that a jitter sensitive packet flow is to utilize the output port and transmits the message received by the node in step 304. However, step 304 is optional because alternatively the node may automatically set the MTU size to the second MTU value (i.e. perform step 306 below) upon receiving signalling indicating that a new jitter sensitive packet flow is (or is about to) utilize the output port. The signalling may originate in the node or another node, rather than being transmitted in a message from a traffic manager. Alternatively, the node may automatically set the MTU size to the second MTU value (i.e. perform step 306 below) upon receiving a packet of the jitter sensitive pack flow.

In step 306, the node sets the MTU size to the second MTU value. In step 308, the node then transmits other packets through the output port. The other packets have a size no greater than the second MTU value, and the other packets include packets from a jitter sensitive packet flow.

Optionally, in step 310, another message is received from the traffic manager instructing the node to set the MTU size to an MTU value greater than the second MTU value. Step 310 may occur when the traffic manager determines that the jitter sensitive packet flow utilizing the output port has been terminated and transmits the message received by the node in step 310. However, step 310 is optional because alternatively the node may automatically set the set the MTU size to the greater value (i.e. perform step 312 below) upon determining that the jitter sensitive packet flow has been terminated, without needing to receive an explicit message from the traffic manager. For example, the node may automatically set the MTU value to the greater value after a predetermined period of time has elapsed without receiving any further packets of the jitter sensitive packet flow.

In step 312, the node sets the MTU size to the MTU value greater than the second MTU value. The MTU value greater than the second MTU value may be the first MTU value. That is, the node may return the MTU size back to the first MTU value.

The second MTU value is for use when the jitter sensitive packet flow is present. This does not mean that the second MTU value cannot be used when a jitter sensitive packet flow is not present. On the contrary, the MTU size may be set to the second MTU value before the jitter sensitive packet flow begins and remain until after the jitter sensitive packet flow terminates. This may ensure that the reduced MTU size is present for the whole jitter sensitive packet flow. Similarly, just because the second MTU value is for use when the jitter sensitive packet flow is present, this does not mean that the first MTU value cannot be used when the jitter sensitive packet flow is present. On the contrary, the MTU size may be set to the second MTU value after the jitter sensitive packet flow begins, e.g. in response to the node determining that there are now jitter sensitive packets. However, in any case, the purpose of the second MTU value is for the jitter sensitive packet flow and to prioritize the jitter sensitive packet flow. The first MTU value may be for use when the jitter sensitive packet flow is not present.

The setting the MTU size to the second MTU value is performed to prioritize the jitter sensitive packet flow. The setting the MTU size to the second MTU value may be performed in response to a message. The message may be from a traffic manager, but could be from other network entities instead, or the message may even be generated within the node itself. The message may be an explicit message indicating that a jitter sensitive packet flow is present or will be present. Alternatively, the message may be an implicit message. For example, the message may be the instruction to the node to update the forwarding table and/or the message may be the instruction to the node to reduce the MTU size to the second MTU value.

In some embodiments, the packets of the jitter sensitive flow have a packet size no greater than the second MTU value so that the packets of the jitter sensitive flow will not be discarded or fragmented when the MTU size is set to the second MTU value. In some embodiments, when the MTU size is set to the second MTU value, then node may: receive a packet of the jitter sensitive packet flow, store the packet of the jitter sensitive packet flow in a first queue, and prioritize transmission of the packet of the jitter sensitive packet flow through the output port over transmission of another packet stored in another lower priority queue. Using a higher priority first queue for the jitter sensitive packet flow may also assist in reducing jitter in the jitter sensitive packet flow. In some embodiments, prior to setting the MTU size to the second MTU value, the node receives a message querying one or more of the following: whether or not pre-emption is supported for the output port, and/or the speed of a link connected to the output port, and/or the current MTU size of the output port. A response to the query may be transmitted from the node, and subsequent to transmitting the response, an instruction may be received to perform the setting the MTU size to the second MTU value. In some embodiments, when the MTU size is set to the lower second MTU value, the amount by which the MTU value is decreased (to obtain the second MTU value) is dependent upon the speed of the link.

FIG. 8 is a flowchart of operations performed by another network entity.

The network entity will be referred to as a traffic manager. For example, the method of FIG. 8 may be performed by traffic manager 103.

In step 352, the traffic manager determines that a jitter sensitive packet flow is to use an output port of a node. The output port has an MTU size set to a first MTU value. In step 354, the traffic manager transmits a message instructing the node to set the MTU size to a second MTU value. The second MTU value is smaller than the first MTU value. In step 356, the traffic manager subsequently transmits another message instructing the node to set the MTU size to an MTU value greater than the second MTU value. The subsequent message may be transmitted once the jitter sensitive packet flow is terminated. Optionally, in step 358, steps 352 to 356 are repeated for one or more other nodes on the jitter sensitive packet flow path. In some embodiments, prior to step 354, the method further includes transmitting to the node a message querying one or more of the following: whether or not pre-emption is supported for the output port, and/or the speed of a link connected to the output port, and/or the current MTU size of the output port. A response to the query may be received from the node. Step 354 is then only performed depending upon the response, as discussed earlier. For example, if the response indicates that pre-emption is not supported and the speed of the link is below a threshold, then step 354 may be performed.

In some embodiments, optional step 358 is performed and includes the following steps for each node of a plurality of nodes on the jitter sensitive flow path: (1) determining whether an output port of the node, that will be utilized by the jitter sensitive packet flow, is to have an MTU size of the output port reduced; and (2) when it is determined that the MTU size is to be reduced, then transmitting a message to the node instructing the node to set the MTU size to a value that is smaller than a current MTU size associated with the output port. Step (1) may include transmitting to the node a message querying one or more of the following: whether or not pre-emption is supported for the output port, and/or the speed of a link connected to the output port, and/or the current MTU size of the output port. The decision of whether to reduce the MTU size is then made based on the node's response to the query.

In some embodiments, the method of FIG. 8 may further include the following operations prior to step 352: (1) receiving a request to provision a service for the jitter sensitive packet flow; (2) establishing the jitter sensitive packet flow by determining a path the jitter sensitive pack flow will follow; and (3) transmitting an instruction, to each node of a plurality of nodes on the path, to forward each packet of the jitter sensitive pack flow to a particular respective output port of the node.

FIG. 9 is a block diagram of a node 400, according to another embodiment. The node 400 includes at least one input port 402 and at least one output port 404. The node 400 further includes a processor 406 and a memory 408. The memory 408 has instructions stored therein that, when accessed and executed by the processor 406, cause the processor 406 to perform the node operations described herein. For example, the processor 406 may execute the instructions to perform the operations of the receiver 152, the mapper 154, the transmitter 168, the controller 174, and the MTU enforcer 176 of FIG. 3. The memory 408 may store the forwarding table 158 and the buffer 172 of FIG. 3. The memory 408 may also implement the queues 160 and 162 of FIG. 3, e.g. as virtual output queues.

Although the present invention has been described with reference to specific features and embodiments thereof, various modifications and combinations can be made thereto without departing from the scope of the present invention, as defined by the appended set of claims. Therefore, although the present invention and its advantages have been described in detail, various changes can be made herein without departing from the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

Moreover, any module, component, or device exemplified herein that executes instructions may include or otherwise have access to a non-transitory computer/processor readable storage medium or media for storage of information, such as computer/processor readable instructions, data structures, program modules, and/or other data. A non-exhaustive list of examples of non-transitory computer/processor readable storage media includes magnetic cassettes, magnetic tape, magnetic disk storage or other magnetic storage devices, optical disks such as compact disc read-only memory (CD-ROM), digital video discs or digital versatile disc (DVDs), Blu-ray Disc^{™}, or other optical storage, volatile and non-volatile, removable and non-removable media implemented in any method or technology, random-access memory (RAM), read-only memory (ROM), electrically erasable programmable read-only memory (EEPROM), flash memory or other memory technology. Any such non-transitory computer/processor storage media may be part of a device or accessible or connectable thereto. Any application or module herein described may be implemented using computer/processor readable/executable instructions that may be stored or otherwise held by such non-transitory computer/processor readable storage media.

## Claims

1. A method performed by a network entity being a first network entity, the method comprising:
transmitting (302) packets through an output port (106, 116, 124) of the first network entity, the output port (106, 116, 124) having a maximum transmission unit, MTU, size set to a first MTU value, and the packets having a size no greater than the first MTU value;
setting (306) the MTU size to a second MTU value, when a jitter sensitive packet flow is utilizinq the output port (106, 116, 124), the second MTU value smaller than the first MTU value, wherein the setting (306) the MTU size to the second MTU value comprises receiving (304) a message, from a second network entity being a traffic manager (103), instructing the first network entity to perform the setting the MTU size to the second MTU value;
transmitting (308) other packets through the output port (106, 116, 124), the other packets having a size no greater than the second MTU value, and the other packets including packets from the jitter sensitive packet flow; and
setting (312) the MTU size to an MTU value greater than the second MTU value when the jitter sensitive packet flow utilizing the output port (106, 116, 124) has been terminated or after a predetermined period of time has elapsed without receiving any further packets of the jitter sensitive packet flow, wherein the setting (312) the MTU size to the MTU value greater than the second MTU value comprises subsequently receiving (310) another message, from the second network entity, instructing the first network entity to perform the setting the MTU size to the MTU value greater than the second MTU value,
the method further comprising:
prior to setting the MTU size to the second MTU value:
receiving a message, from the second network entity, querying whether or not pre-emption is supported for the output port (106, 116, 124), wherein the pre-emption is supported for the output port (106, 116, 124) if the first network entity is capable of performing pre-emption for packets transmitted through output port (106, 116, 124) and has the functionality to halt the transmission of a first packet before the first packet is finished being transmitted through output port (106, 116, 124), transmit a second packet, and then finish transmitting the first packet once the second packet has completed transmission;
transmitting a response indicating that pre-emption is not supported for the output port (106, 116, 124); and
subsequent to transmitting the response, receiving an instruction to perform the setting the MTU size to the second MTU value.

2. The method of any one of claim 1, wherein the setting the MTU size to the second MTU value is performed to prioritize the jitter sensitive packet flow in response to a message.

3. The method of any one of claims 1 to 2 wherein the setting the MTU size to the second MTU value is performed in response to receipt of a packet in the jitter sensitive packet flow.

4. The method of any one of claims 1 to 3, further comprising, when the MTU size is set to the second MTU value:
receiving a packet of the jitter sensitive packet flow;
storing the packet of the jitter sensitive packet flow in a first queue; and
prioritizing transmission of the packet of the jitter sensitive packet flow through the output port (106, 116, 124) over transmission of another packet stored in another lower priority queue.

5. The method of any one of claims 1 to 4, the method further comprising:
prior to setting the MTU size to the second MTU value:
receiving a message, from the second network entity, querying a speed of a link connected to the output port (106, 116, 124); and
transmitting a response indicating the speed of the link;
subsequent to transmitting the response, receiving an instruction to perform the setting the MTU size to the second MTU value.

6. A network entity comprising one or more processors and a memory (408), wherein the memory (408) is configured to store instructions, and the one or more processors (406) are configured to execute the instructions to cause the processor (406) to perform the method in any one of claims 1-5.

7. A method performed by a second network entity being a traffic manager (103) in a network, the method comprising:
determining (352) that a jitter sensitive packet flow is to use an output port (106, 116, 124) of a first network entity, the output port (106, 116, 124) having a maximum transmission unit, MTU, size set to a first MTU value;
transmitting (354) a message instructing the first network entity to set the MTU size to a second MTU value, when the jitter sensitive packet flow is utilizinq the output port (106, 116, 124), the second MTU value smaller than the first MTU value;
transmitting (356) a subsequent message instructing the first network entity to set the MTU size to an MTU value greater than the second MTU value when the jitter sensitive packet flow utilizing the output port (106, 116, 124) has been terminated or after a predetermined period of time has elapsed without receiving any further packets of the jitter sensitive packet flow,
further comprising:
transmitting to the first network entity a message querying whether or not pre-emption is supported for the output port (106, 116, 124), wherein the pre-emption is supported for the output port (106, 116, 124) if the first network entity is capable of performing pre-emption for packets transmitted through output port (106, 116, 124) and has the functionality to halt the transmission of a first packet before the first packet is finished being transmitted through output port (106, 116, 124), transmit a second packet, and then finish transmitting the first packet once the second packet has completed transmission;
receiving a response from the first network entity, the response indicating that pre-emption is not supported for the output port (106, 116, 124); and
after receiving the response, instructing the first network entity to set the MTU size to the second MTU value.

8. The method of claim 7, further comprising:
transmitting to the first network entity a message requesting a speed of a link connected to the output port (106, 116, 124);
receiving a response from the first network entity indicating the speed of the link;
determining that the speed of the link is below a threshold;
after determining that the speed of the link is below the threshold, transmitting the message instructing the first network entity to set the MTU size to the second MTU value.

9. The method of any one of claims 7 to 8, wherein the first network entity is one of a plurality of nodes on a path of the jitter sensitive packet flow, and the method further comprising:
for each node of the plurality of nodes:
determining whether an output port (106, 116, 124) of the node, that will be utilized by the jitter sensitive packet flow, is to have an MTU size of the output port (106, 116, 124) reduced; and
when it is determined that the MTU size is to be reduced, then transmitting a message to the node instructing the node to set the MTU size to a value that is smaller than a current MTU size associated with the output port (106, 116, 124).

10. A traffic manager (103) comprising one or more processors and a memory (408), wherein the memory (408) is configured to store instructions, and the one or more processors (406) are configured to execute the instructions to cause the processor (406) to perform the method in any one of claims 7 to 9.

11. A non-transitory computer readable storage medium, wherein the medium is configured to store computer readable instruction, when the instruction is executed in an entity, the entity performs the method in any one of claims 1-5 and 7-9.

## Patentansprüche

1. Verfahren, das mittels einer Netzwerkentität durchgeführt wird, die eine erste Netzwerkentität ist, wobei das Verfahren Folgendes umfasst:
Übertragen (302) von Datenpaketen durch einen Ausgangsport (106, 116, 124) der ersten Netzwerkentität, wobei der Ausgangsport (106, 116, 124) eine maximale Übertragungseinheits(maximum transmission unit- MTU)-Größe, die auf einen ersten MTU-Wert eingestellt ist, aufweist, und die Datenpakete eine Größe aufweisen, die nicht größer als der erste MTU-Wert ist;
Einstellen (306) der MTU-Größe auf einen zweiten MTU-Wert, wenn ein jitterempfindlicher Datenpaketfluss den Ausgangsport (106, 116, 124) verwendet, wobei der zweite MTU-Wert kleiner als der erste MTU-Wert ist, wobei das Einstellen (306) der MTU-Größe auf den zweiten MTU-Wert ein Empfangen (304) einer Nachricht von einer zweiten Netzwerkentität umfasst, die ein Datenverkehrsmanager (103) ist, der die erste Netzwerkentität anweist, das Einstellen der MTU-Größe auf den zweiten MTU-Wert durchzuführen;
Übertragen (308) anderer Datenpakete durch den Ausgangsport (106, 116, 124), wobei die anderen Datenpakete eine Größe aufweisen, die nicht größer als der zweite MTU-Wert ist, und die anderen Datenpakete Datenpakete aus dem jitterempfindlichen Datenpaketfluss beinhalten; und
Einstellen (312) der MTU-Größe auf einen MTU-Wert, der größer als der zweite MTU-Wert ist, wenn der jitterempfindliche Datenpaketfluss, der den Ausgangsport (106, 116, 124) verwendet, zum Abschluss gebracht wurde, oder nachdem eine zuvor bestimmte Zeitspanne ohne Empfangen weiterer Datenpakete des jitterempfindlichen Datenpaketflusses verstrichen ist, wobei das Einstellen (312) der MTU-Größe auf den MTU-Wert, der größer als der zweite MTU-Wert ist, das nachfolgende Empfangen (310) einer anderen Nachricht von der zweiten Netzwerkentität umfasst, die die erste Netzwerkentität anweist, das Einstellen der MTU-Größe auf den MTU-Wert, der größer als der zweite MTU-Wert ist, durchzuführen,
wobei das Verfahren ferner Folgendes umfasst:
vor dem Einstellen der MTU-Größe auf den zweiten MTU-Wert:
Empfangen einer Nachricht von der zweiten Netzwerkentität, Abfragen, ob eine Preemption für den Ausgangsport (106, 116, 124) unterstützt wird oder nicht, wobei die Preemption für den Ausgangsport (106, 116, 124) unterstützt wird, falls die erste Netzwerkentität in der Lage ist, die Preemption für Datenpakete, die durch den Ausgangsport (106, 116, 124) übertragen werden, durchzuführen, und die Funktionalität aufweist, die Übertragung eines ersten Datenpakets anzuhalten, bevor das Übertragen des ersten Datenpakets durch den Ausgangsport (106, 116, 124) beendet wird, ein zweites Datenpaket zu übertragen und dann das Übertragen des ersten Datenpakets zu beenden, sobald das zweite Datenpaket die Übertragung fertiggestellt hat;
Übertragen einer Antwort, die angibt, dass die Preemption für den Ausgangsport (106, 116, 124) nicht unterstützt wird; und
nachfolgend an das Übertragen der Antwort, Empfangen einer Anweisung, um das Einstellen der MTU-Größe auf den zweiten MTU-Wert durchzuführen.

2. Verfahren nach Anspruch 1, wobei das Einstellen der MTU-Größe auf den zweiten MTU-Wert durchgeführt wird, um den jitterempfindlichen Datenpaketfluss als Reaktion auf eine Nachricht zu priorisieren.

3. Verfahren nach einem der Ansprüche 1 bis 2, wobei das Einstellen der MTU-Größe auf den zweiten MTU-Wert durchgeführt wird als Reaktion auf den Empfang eines Datenpakets in dem jitterempfindlichen Datenpaketfluss.

4. Verfahren nach einem der Ansprüche 1 bis 3, das ferner Folgendes umfasst, wenn die MTU-Größe auf den zweiten MTU-Wert eingestellt ist:
Empfangen eines Datenpakets des jitterempfindlichen Datenpaketflusses;
Speichern des Datenpakets des jitterempfindlichen Datenpaketflusses in einer ersten Warteschlange; und
Priorisieren der Übertragung des Datenpakets des jitterempfindlichen Datenpaketflusses durch den Ausgangsport (106, 116, 124) über die Übertragung eines anderen Datenpakets, das in einer anderen Warteschlange mit niedrigerer Priorität gespeichert ist.

5. Verfahren nach einem der Ansprüche 1 bis 4, wobei das Verfahren ferner Folgendes umfasst:
vor dem Einstellen der MTU-Größe auf den zweiten MTU-Wert:
Empfangen einer Nachricht von der zweiten Netzwerkentität, die eine Geschwindigkeit eines Links, der mit dem Ausgangsport (106, 116, 124) verbunden ist, abfragt; und
Übertragen einer Antwort, die die Geschwindigkeit des Links angibt;
nachfolgend an das Übertragen der Antwort, Empfangen einer Anweisung, um das Einstellen der MTU-Größe auf den zweiten MTU-Wert durchzuführen.

6. Netzwerkentität, die einen oder mehrere Prozessoren und einen Speicher (408) umfasst, wobei der Speicher (408) konfiguriert ist, um Anweisungen zu speichern, und der eine oder die mehreren Prozessoren (406) konfiguriert sind, um die Anweisungen auszuführen, um den Prozessor (406) zu veranlassen, das Verfahren nach einem der Ansprüche 1-5 durchzuführen.

7. Verfahren, das mittels einer zweiten Netzwerkentität durchgeführt wird, die ein Datenverkehrsmanager (103) in einem Netzwerk ist, wobei das Verfahren Folgendes umfasst:
Bestimmen (352), dass ein jitterempfindlicher Datenpaketfluss einen Ausgangsport (106, 116, 124) einer ersten Netzwerkentität nutzen soll, wobei der Ausgangsport (106, 116, 124) eine maximale Übertragungseinheits(MTU)-Größe aufweist, die auf einen ersten MTU-Wert eingestellt ist;
Übertragen (354) einer Nachricht, die die erste Netzwerkentität anweist, die MTU-Größe auf einen zweiten MTU-Wert einzustellen, wenn der jitterempfindliche Datenpaketfluss den Ausgangsport (106, 116, 124) verwendet, wobei der zweite MTU-Wert kleiner als der erste MTU-Wert ist;
Übertragen (356) einer nachfolgenden Nachricht, die die erste Netzwerkentität anweist, die MTU-Größe auf einen MTU-Wert einzustellen, der größer als der zweite MTU-Wert ist, wenn der jitterempfindliche Datenpaketfluss, der den Ausgangsport (106, 116, 124) verwendet, zum Abschluss gebracht wurde, oder nachdem eine zuvor bestimmte Zeitspanne ohne Empfangen weiterer Datenpakete des jitterempfindlichen Datenpaketflusses verstrichen ist,
wobei das Verfahren ferner Folgendes umfasst:
Übertragen an die erste Netzwerkentität einer Nachricht, die abfragt, ob die Preemption für den Ausgangsport (106, 116, 124) unterstützt wird oder nicht, wobei die Preemption für den Ausgangsport (106, 116, 124) unterstützt wird, falls die erste Netzwerkentität in der Lage ist, die Preemption für Datenpakete, die durch den Ausgangsport (106, 116, 124) übertragen werden, durchzuführen, und die Funktionalität aufweist, die Übertragung eines ersten Datenpakets anzuhalten, bevor das Übertragen des ersten Datenpakets durch den Ausgangsport (106, 116, 124) beendet wird, ein zweites Datenpaket zu übertragen und dann das Übertragen des ersten Datenpakets zu beenden, sobald das zweite Datenpaket die Übertragung fertiggestellt hat;
Empfangen einer Antwort von der ersten Netzwerkentität, wobei die Antwort angibt, dass die Preemption für den Ausgangsport (106, 116, 124) nicht unterstützt wird; und
nach dem Empfangen der Antwort, Anweisen der ersten Netzwerkentität, die MTU-Größe auf den zweiten MTU-Wert einzustellen.

8. Verfahren nach Anspruch 7, das ferner Folgendes umfasst:
Übertragen an die erste Netzwerkentität einer Nachricht, die eine Geschwindigkeit eines Links, der mit dem Ausgangsport (106, 116, 124) verbunden ist, anfordert;
Empfangen einer Antwort von der ersten Netzwerkentität, die die Geschwindigkeit des Links angibt;
Bestimmen, dass die Geschwindigkeit des Links unter einem Schwellenwert liegt;
nach dem Bestimmen, dass die Geschwindigkeit des Links unter dem Schwellenwert liegt, Übertragen der Nachricht, die die erste Netzwerkentität anweist, die MTU-Größe auf den zweiten MTU-Wert einzustellen.

9. Verfahren nach einem der Ansprüche 7 bis 8, wobei die erste Netzwerkentität eine von mehreren Knoten auf einem Pfad des jitterempfindlichen Datenpaketflusses ist und das Verfahren ferner Folgendes umfasst:
für jeden Knoten der mehreren Knoten:
Bestimmen, ob ein Ausgangsport (106, 116, 124) des Knotens, der mittels des jitterempfindlichen Datenpaketflusses verwendet wird, eine MTU-Größe des Ausgangsports (106, 116, 124) reduzieren lassen soll; und
wenn bestimmt wird, dass die MTU-Größe reduziert werden soll, dann Übertragen einer Nachricht an den Knoten, die den Knoten anweist, die MTU-Größe auf einen Wert einzustellen, der kleiner ist als eine aktuelle MTU-Größe ist, die mit dem Ausgangsport (106, 116, 124) verknüpft ist.

10. Datenverkehrsmanager (103), der einen oder mehrere Prozessoren und einen Speicher (408) umfasst, wobei der Speicher (408) konfiguriert ist, um Anweisungen zu speichern, und der eine oder die mehreren Prozessoren (406) konfiguriert sind, um die Anweisungen auszuführen, um den Prozessor (406) zu veranlassen, das Verfahren nach einem der Ansprüche 7 bis 9 durchzuführen.

11. Nicht flüchtiges computerlesbares Speichermedium, wobei das Medium konfiguriert ist, um computerlesbare Anweisungen zu speichern, wenn die Anweisung in einer Entität ausgeführt wird, wobei die Entität das Verfahren nach einem der Ansprüche 1-5 und 7-9 durchführt.

## Revendications

1. Procédé effectué par une entité de réseau étant une première entité de réseau, le procédé comprenant :
la transmission (302) de paquets par un port de sortie (106, 116, 124) de la première entité de réseau, le port de sortie (106, 116, 124) ayant une taille d'unité de transmission maximale, MTU, réglée à une première valeur de MTU, et les paquets ayant une taille non supérieure à la première valeur de MTU ;
le réglage (306) de la taille de MTU à une seconde valeur de MTU, lorsqu'un flux de paquets sensible à la gigue utilise le port de sortie (106, 116, 124), la seconde valeur de MTU étant inférieure à la première valeur de MTU, le réglage (306) de la taille de MTU à la seconde valeur de MTU comprend la réception (304) d'un message, provenant d'une seconde entité de réseau étant un gestionnaire de trafic (103), ordonnant à la première entité de réseau d'effectuer le réglage de la taille de MTU à la seconde valeur de MTU ;
la transmission (308) d'autres paquets par le port de sortie (106, 116, 124), les autres paquets ayant une taille non supérieure à la seconde valeur de MTU, et les autres paquets comportant des paquets provenant du flux de paquets sensible à la gigue ; et
le réglage (312) de la taille de MTU à une valeur de MTU supérieure à la seconde valeur de MTU lorsque le flux de paquets sensible à la gigue utilisant le port de sortie (106, 116, 124) a été interrompu ou après qu'une période de temps prédéterminée s'est écoulée sans en recevoir davantage de paquets du flux de paquets sensible à la gigue, le réglage (312) de la taille de MTU sur la valeur de MTU supérieure à la seconde valeur de MTU comprenant la réception (310) ultérieure d'un autre message, en provenance de la seconde entité de réseau, ordonnant à la première entité de réseau d'effectuer le réglage de la taille de MTU à la valeur de MTU supérieure à la seconde valeur de MTU,
le procédé comprenant en outre :
avant de régler la taille de MTU à la seconde valeur de MTU :
la réception d'un message, en provenance de la seconde entité de réseau, demandant si la préemption est prise en charge ou non pour le port de sortie (106, 116, 124), la préemption étant prise en charge pour le port de sortie (106, 116, 124) si la première entité de réseau est capable d'effectuer une préemption pour des paquets transmis par le port de sortie (106, 116, 124) et a la fonctionnalité pour arrêter la transmission d'un premier paquet avant la fin de la transmission du premier paquet par le port de sortie (106, 116, 124), transmettre un second paquet, puis terminer la transmission du premier paquet une fois que le second paquet a achevé la transmission ;
la transmission d'une réponse indiquant que la préemption n'est pas prise en charge pour le port de sortie (106, 116, 124) ; et
après la transmission de la réponse, la réception d'une instruction pour effectuer le réglage de la taille de MTU à la seconde valeur de MTU.

2. Procédé selon l'une quelconque de la revendications 1, dans lequel le réglage de la taille de MTU à la seconde valeur de MTU est effectué pour prioriser le flux de paquets sensible à la gigue en réponse à un message.

3. Procédé selon l'une quelconque des revendications 1 à 2, dans lequel le réglage de la taille de MTU à la seconde valeur de MTU est effectué en réponse à la réception d'un paquet dans le flux de paquets sensible à la gigue.

4. Procédé selon l'une quelconque des revendications 1 à 3, comprenant en outre, lorsque la taille de MTU est réglée à la seconde valeur de MTU :
la réception d'un paquet du flux de paquets sensible à la gigue ;
le stockage du paquet du flux de paquets sensible à la gigue dans une première file d'attente ; et
la priorisation de la transmission du paquet du flux de paquets sensible à la gigue par le port de sortie (106, 116, 124) par rapport à la transmission d'un autre paquet stocké dans une autre file d'attente de priorité inférieure.

5. Procédé selon l'une quelconque des revendications 1 à 4, comprenant en outre :
avant de régler la taille de MTU à la seconde valeur de MTU :
la réception d'un message, en provenance de la seconde entité de réseau, demandant une vitesse d'une liaison connectée au port de sortie (106, 116, 124) ; et
la transmeission d'une réponse indiquant la vitesse de la liaison ;
après la transmission de la réponse, la réception d'une instruction pour effectuer le réglage de la taille de MTU à la seconde valeur de MTU.

6. Entité de réseau comprenant un ou plusieurs processeurs et une mémoire (408), la mémoire (408) étant configurée pour stocker des instructions, et le ou les processeurs (406) étant configurés pour exécuter les instructions afin d'amener le processeur (406) à mettre en oeuvre le procédé selon l'une quelconque des revendications 1 à 5.

7. Procédé exécuté par une seconde entité de réseau étant un gestionnaire de trafic (103) dans un réseau, le procédé comprenant :
la détermination (352) du fait qu'un flux de paquets sensible à la gigue doit utiliser un port de sortie (106, 116, 124) d'une première entité de réseau, le port de sortie (106, 116, 124) ayant une taille d'unité de transmission maximale, MTU, réglée à une première valeur de MTU ;
la transmission (354) d'un message ordonnant à la première entité de réseau de régler la taille de MTU à une seconde valeur de MTU, lorsque le flux de paquets sensible à la gigue utilise le port de sortie (106, 116, 124), la seconde valeur de MTU est inférieure à la première valeur de MTU ;
la transmission (356) d'un message ultérieur ordonnant à la première entité de réseau de régler la taille de MTU à une valeur de MTU supérieure à la seconde valeur de MTU lorsque le flux de paquets sensible à la gigue utilisant le port de sortie (106, 116, 124) a été interrompu ou après qu'une période de temps prédéterminée s'est écoulée sans recevoir d'autres paquets du flux de paquets sensible à la gigue,
comprenant en outre :
la transmission à la première entité de réseau d'un message demandant si la préemption est prise en charge ou non pour le port de sortie (106, 116, 124), la préemption étant prise en charge pour le port de sortie (106, 116, 124) si le premier l'entité de réseau est capable d'effectuer une préemption pour les paquets transmis par le port de sortie (106, 116, 124) et a la fonctionnalité pour arrêter la transmission d'un premier paquet avant la fin de la transmission du premier paquet par le port de sortie (106, 116, 124), transmettre un second paquet, puis terminer la transmission du premier paquet une fois que le second paquet a achevé la transmission ;
la réception d'une réponse de la première entité de réseau, la réponse indiquant que la préemption n'est pas prise en charge pour le port de sortie (106, 116, 124) ; et
après réception de la réponse, l'instruction à la première entité de réseau de régler la taille de MTU à la seconde valeur de MTU.

8. Procédé selon la revendication 7, comprenant en outre :
la transmission à la première entité de réseau d'un message demandant une vitesse d'une liaison connectée au port de sortie (106, 116, 124) ;
la réception d'une réponse de la première entité de réseau indiquant la vitesse de la liaison ;
la détermination du fait que la vitesse de la liaison est inférieure à un seuil ;
après la détermination du fait que la vitesse de la liaison est inférieure au seuil, la transmission du message ordonnant à la première entité de réseau de régler la taille de MTU à la seconde valeur de MTU.

9. Procédé selon l'une quelconque des revendications 7 à 8, dans lequel la première entité de réseau est l'un d'une pluralité de noeuds sur un trajet du flux de paquets sensible à la gigue, et le procédé comprenant en outre :
pour chaque noeud de la pluralité de noeuds :
la détermination du fait de savoir si un port de sortie (106, 116, 124) du noeud, qui sera utilisé par le flux de paquets sensible à la gigue, doit avoir une taille de MTU du port de sortie (106, 116, 124) réduite ; et
lorsqu'il est déterminé que la taille de MTU doit être réduite, la transmission d'un message au noeud ordonnant au noeud de régler la taille de MTU à une valeur qui est inférieure à une taille de MTU actuelle associée au port de sortie (106, 116, 124).

10. Gestionnaire de trafic (103) comprenant un ou plusieurs processeurs et une mémoire (408), dans lequel la mémoire (408) est configurée pour stocker des instructions, et le ou les processeurs (406) sont configurés pour exécuter les instructions afin d'amener le processeur (406) à mettre en oeuvre le procédé selon l'une quelconque des revendications 7 à 9.

11. Support de stockage lisible par ordinateur non transitoire, dans lequel le support est configuré pour stocker une instruction lisible par ordinateur, lorsque l'instruction est exécutée dans une entité, l'entité exécute le procédé selon l'une quelconque des revendications 1 à 5 et 7 à 9.
